# EUROPEAN PATENT APPLICATION

(11) **EP 4 730 410 A1**
(43) Date of publication of application: **22.04.2026**
(21) Application number: 25208646.7
(22) Date of filing: 14.10.2025
(51) Int. Cl.: H01M 4/04, H01M 4/1393

(54) **ELECTRODE ASSEMBLY AND RECHARGEABLE BATTERY INCLUDING THE SAME**

(30) Priority: 15.10.2024 KR 20240140557
(71) Applicant: SAMSUNG SDI CO., LTD., Yongin-si, Gyeonggi-do 17084 (KR)
(72) Inventor: LEE, Hojung, Yongin-si, Gyeonggi-do 17084 (KR)
(74) Representative: Michalski Hüttermann & Partner Patentanwälte mbB

(57) **Abstract**

An electrode assembly of the present disclosure includes a separator; and a plurality of electrode plates stacked together, with the separator therebetween, wherein the electrode plate includes a substrate; and an active material layer in which a magnetized part magnetized by a magnetizing device, and a non-magnetized part not magnetized by the magnetizing device, are alternately disposed along the length direction of the substrate.

## Description

### BACKGROUND OF THE DISCLOSURE

### (a) Field of the Disclosure

The present disclosure relates to an electrode assembly, and to a rechargeable battery including the electrode assembly.

### (b) Description of the Related Art

Rechargeable batteries are widely in small devices such as, e.g., portable electronic devices, and in medium- and large-sized devices such as, e.g., battery packs, or power storage devices for hybrid vehicles or electric vehicles, or the like.

These rechargeable batteries are power elements capable of being repeatedly charged and discharged, and typically consist of a stacking structure of positive electrode/separator/negative electrode, where the positive electrode typically includes lithium metal oxide as a positive electrode active material, and the negative electrode includes a carbon-based negative electrode active material such as, e.g., graphite. During charging, lithium ions released from the positive electrode are absorbed into the carbon-based negative electrode active material of the negative electrode, and during discharging, lithium ions included within the carbon-based negative electrode active material are absorbed into the lithium metal oxide of the positive electrode, thereby having a configuration in which the charging and discharging are repeated.

Graphite materials such as, e.g., natural graphite, may be used as the negative electrode active material for the negative electrode. This graphite has a layered structure, and is made up of multiple layers stacked in a planar, spread-out fashion with carbon atoms forming a network structure.

During charging, lithium ions invade the edge surfaces (surfaces where the layers overlap) of these graphite layers and diffuse between the layers. Additionally, during the discharging, lithium ions may be released from the edge surfaces of the layers. Because graphite has a lower electrical resistance in a surface direction of the layer than in a stacking direction of the layer, a conduction path for electrons diverted along the surface direction of the layer is created.

In this regard, the process for manufacturing an electrode plate (a negative electrode plate) of a lithium rechargeable battery 1 using graphite is as follows.

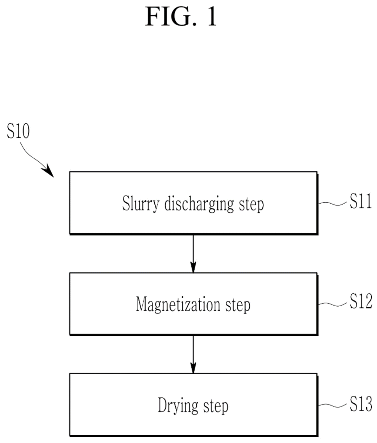

FIG. 1 is a flowchart illustrating a typical manufacturing method of an electrode plate.

Referring to FIG. 1, a method (S10) for manufacturing an electrode plate may include a slurry discharging step (S11) for discharging a slurry to a substrate, a magnetization step (S12) for magnetically orienting the graphite, and a drying step (S13) for drying the slurry.

As an example, the magnetization step S12 may include magnetically orienting the graphite included in the negative electrode to improve the charging performance of the negative electrode. For example, the graphite has a configuration in which a [0,0,2] crystal plane of the graphite is oriented and fixed so that the graphite is nearly or substantially horizontal with respect to a negative current collector in a magnetic field when forming the negative electrode. In this case, since the edge surface of the graphite layer faces the positive active layer, the insertion and de-insertion of the lithium ions are performed smoothly, and the conduction path of the electrons is shortened, so that the electron conductivity of the negative electrode may be improved, which may improve the charging performance of the battery.

To this end, in the manufacture of the negative electrode, a method includes applying a magnetic field to a negative electrode slurry that includes the graphite as a carbon-based negative electrode active material using a magnetizing device to orient the graphite.

For example, the orientation refers to the process of making the direction of the graphite layer constant, or substantially constant, by passing the negative electrode coating layer over the magnetization device embedded with a strong permanent magnet. When the orientation is as desired, the movement distance of lithium ions (Li ions) within the graphite is minimized, which reduces a resistance for the movement and improves the battery performance.

The electrode plate magnetized by the general magnetizing device has a characteristic of expanding in a parallel, or substantially parallel, direction, rather than a vertical, or substantially vertical, direction, of the electrode plate during the charging and discharging of the negative electrode. Accordingly, during the charging and discharging process of the rechargeable battery, as the stress applied to a desired part increases, lithium may be precipitated (solidified) in the warped part of the electrode plate included in the jelly-roll type electrode assembly, or a degradation characteristic may occur in the electrode assembly.

### SUMMARY

The present disclosure is intended to at least address the conventional challenges described above, and the present disclosure describes an electrode assembly in which the occurrence of stress may be reduced or minimized, and a rechargeable battery including the electrode assembly.

However, a technical object to be addressed by the present disclosure is not limited to the above-described challenges, and other challenges not mentioned would be clearly understood by a person of ordinary skill in the art from the description of the disclosure set forth below.

An electrode assembly according to the present disclosure includes a separator, and a plurality of electrode plates stacked together, with the separator therebetween, wherein the electrode plate includes a substrate, and an active material layer in which a magnetized part magnetized by a magnetizing device, and a non-magnetized part, which is not magnetized by the magnetizing device, are alternately disposed along the length direction of the substrate.

The length of the non-magnetized part may be within the range of about 10% to about 50% of the length of the magnetized part.

The electrode plate and the separator may be wound in one direction while being stacked on each other, and the length of the non-magnetized part relative to the length of the magnetized part may be formed to be increased from about 10% to about 50% from the center of the electrode assembly toward the outside.

An electrode assembly according to the present disclosure includes a separator, and a plurality of electrode plates stacked together, with the separator therebetween, wherein the electrode plate includes a substrate, and an active material layer including a non-magnetized part that is positioned along an edge with the length direction of the substrate as a reference and is not magnetized by a magnetizing device, and a magnetized part that is magnetized by the magnetizing device and is in the remaining part of the substrate excluding the non-magnetized part.

The width of the non-magnetized part may be within the range of about 10% to about 20% of the width of the magnetized part.

The active material layer may include at least one of a graphite particle, a binder, and a conductive material.

The graphite particles included in the magnetized part may be oriented in a direction substantially orthogonal to the substrate.

The electrode plate may include a positive electrode plate and a negative electrode plate.

A rechargeable battery according to the present disclosure includes the above-described electrode assembly, and a case that accommodates the electrode assembly.

The electrode assembly according to the present disclosure includes the electrode plate including the non-magnetized part and the magnetized part. Accordingly, by having the characteristics of rapid performance, and alleviating the force applied to certain parts of the electrode assembly, the degradation characteristics of the rechargeable batteries may also be alleviated.

### BRIEF DESCRIPTION OF THE DRAWINGS

FIG. 1 is a flowchart illustrating a typical manufacturing method of an electrode plate.
FIG. 2 is an exploded perspective view illustrating a rechargeable battery.
FIG. 3 is a cross-sectional view illustrating an electrode plate included in the rechargeable battery of FIG. 2.
FIG. 4 is a cross-sectional view illustrating a state in which a slurry is applied to a substrate.
FIG. 5 is a cross-sectional view illustrating a state in which graphite particles included in a slurry are oriented by a magnetizing device.
FIG. 6 is a cross-sectional view illustrating a state in which a slurry is dried by a drying device and a solvent is removed.
FIG. 7 is a developed diagram unfolding and illustrating an electrode plate included in an electrode assembly according to an example embodiment.
FIG. 8 is a developed diagram unfolding and illustrating an electrode plate included in an electrode assembly according to another example embodiment of the present disclosure.
FIG. 9 is a perspective view illustrating a cylindrical rechargeable battery to which an electrode assembly of FIG. 8 can be applied.

### DETAILED DESCRIPTION

Example embodiments of the present disclosure are provided to more completely explain the present disclosure to those of ordinary skill in the art, and the following example embodiments may be modified in many different forms, and the scope of the present disclosure is not limited to the following example embodiments. Rather, these example embodiments are provided to make the present disclosure more faithful and complete, and to fully convey the idea of the present disclosure to those of ordinary skill in the art.

Additionally, in the drawings below, the thickness and size of each layer are exaggerated for better understanding and ease of description and clarity, and the same symbols in the drawings indicate the same elements. As used in this specification, the term "and/or" includes any one of the listed items and any combination of one or more. In addition, the meaning of "connected" in this specification indicates not only the case where a member A and a member B are directly connected, but also the case where a member C is interposed between the member A and the member B, so that the member A and the member B are indirectly connected.

The terminology used in this specification is used to describe particular embodiments and is not intended to limit the present disclosure. As used in this specification, the singular form may include a plurality of forms, unless the context clearly indicates otherwise. Also, when used in this specification, the words "comprise" and "include" and/or "comprising" and "including" specify the presence of only the shapes, numbers, steps, operations, members, elements, and/or groups thereof, but do not preclude the presence or addition of one or more other shapes, numbers, steps, operations, members, elements, and/or groups.

Although the terms first, second, and the like, are used in this specification to describe various members, components, regions, layers, and/or parts, it should be understood that these members, components, regions, layers, and/or parts should not be limited by these terms. These terms are used only to distinguish one member, component, region, layer, or part from another member, component, region, layer, or part. Therefore, the first member, component, region, layer, or part described below may refer to the second member, component, region, layer, or part without departing from the teachings of the present disclosure.

Additionally, spatially related terms such as "beneath," "below," "lower," "above," and "upper" may be used to facilitate understanding of one element or feature depicted in the drawings relative to another element or feature. These spatially related terms are intended to facilitate understanding of the present disclosure in various process states or usage states and are not intended to limit the present disclosure. For example, when an element or feature of a drawing is flipped, the element or feature described as "lower" or "below" becomes "upper" or "above."

Therefore, "lower" is a concept that includes "upper" or "below."

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

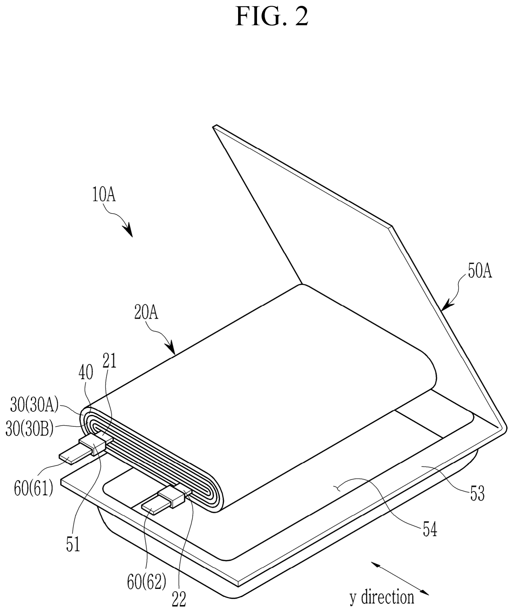

FIG. 2 is an exploded perspective view of a rechargeable battery including an electrode assembly and a case according to an embodiment of the present disclosure.

Referring to FIG. 2, a rechargeable battery 10A may include an electrode assembly 20A, an electrode lead 60, and a case 50A.

The electrode assembly 20A may include a plurality of electrode plates 30 and a separator 40. For example, the plurality of electrode plates 30 may include a first electrode plate 30A and a second electrode plate 30B.

The electrode assembly 20A may be in the form of a structure including the first electrode plate 30A, the second electrode plate 30B, and the separator 40 is wound or repeatedly stacked.

For example, the electrode assembly 20A may be a stacked type electrode assembly in which the electrode plates 30A and 30B are stacked in multiple layers. Alternatively, the electrode assembly 20A may be of a repeatedly wound jelly-roll type electrode assembly.

In this case, there may be one first electrode plate 30A and one second electrode plate 30B. Such a jelly-roll type electrode assembly 20A may be manufactured by winding a stack in which the first electrode plate 30A, the separator 40, and the second electrode plate 30B are stacked onto two winding beams (not shown).

The present disclosure describes the electrode assembly 20A as an example of the jelly-roll type.

The separator 40 may be interposed between the first electrode plate 30A and the second electrode plate 30B. The separator 40 substantially prevents the first electrode plate 30A and the second electrode plate 30B from being short circuited, and is configured to enable the movement of lithium ions. For example, the separator 40 may have a relatively larger size than the first electrode plate 30A or the second electrode plate 30B.

The separator 40 may include, for example, a porous polymer film or a porous non-woven fabric. For example, the porous polymer film may be composed of, or include, a single layer or multiple layers including a polyolefin polymer such as or including at least one of an ethylene polymer, a propylene polymer, an ethylene/butene copolymer, an ethylene/hexene copolymer, and an ethylene/methacrylate copolymer. The porous non-woven fabric may include high-melting-point glass fibers and polyethylene terephthalate fibers. However, the separator 40 is not limited thereto, and according to an example embodiment, the separator 40 may be or include a high-temperature-resistant separator (ceramic coated separator; CCS) including ceramic.

The separator 40 may also be installed to wind in one direction between the first electrode plate 30A and the second electrode plate 30B. Alternatively, when the electrode plates 30A and 30B are stacked, the separator 40 may be cut into unit lengths and positioned between the first electrode plate 30A and the second electrode plate 30B, or one separator 40 in a ribbon shape may be positioned in a zigzag shape between the first electrode plate 30A and the second electrode plate 30B. The arrangement of the separator 40 is not limited to a desired form.

In one aspect, the aforementioned electrode assembly 20A includes electrode tabs 21 and 22. The electrode tabs 21 and 22 may extend from the first electrode plate 30A and the second electrode plate 30B, respectively. The electrode tab extending from the first electrode plate 30A may be a first electrode tab 21, and the electrode tab extending from the second electrode plate 30B may be a second electrode tab 22.

The electrode lead 60 is connected to the electrode tabs 21 and 22. Two electrode leads 61 and 62 may be provided. One electrode lead 61 may be connected to the first electrode tab 21, and the other electrode lead 62 may be connected to the second electrode tab 22. That is, the first electrode plate 30A and the second electrode plate 30B may be electrically connected to the outside of the rechargeable battery 10A through the electrode lead 60, e.g., through the electrode leads 61 and 62, respectively.

Meanwhile, a protective member 51 may wrap around the part corresponding to the case 50A in the electrode lead 60. The protective member 51 may substantially prevent the electrode lead 60 and the case 50A from being electrically connected.

The case 50A may accommodate the electrode assembly 20A. The electrode assembly 20A described above may be housed in the case 50A together with the electrolyte.

For example, the electrolyte may be or include a non-aqueous electrolyte. The electrolyte may include a lithium salt and an organic solvent. The organic solvent may include one or more of propylene carbonate (PC), ethylene carbonate (EC), diethyl carbonate (DEC), dimethyl carbonate (DMC), ethyl methyl carbonate (EMC), methyl propyl carbonate (MPC), dipropyl carbonate (DPC), vinylene carbonate (VC), dimethyl sulfoxide, acetonitrile, dimethoxy ethane, diethoxy ethane, sulfolane, gamma-butyrolactone, propylene sulfide, and tetrahydrofuran.

The case 50A as described above may be any one of a pouch type, a cylindrical type, and a square type. The case 50A of the pouch type may be manufactured by bending plate-shaped outer materials so that they face each other, then pressing or drawing one surface and including a recess on the other surface.

The electrode assembly 20A is accommodated in a recess 54. A sealing part 53 is provided at the exterior circumference of the recess 54, and while the electrode assembly 20A is accommodated in the recess 54, the sealing part 53 is sealed by a method such as, e.g., heat coalescing.

For example, the plurality of electrode plates 30A and 30B may include a positive electrode plate and a negative electrode plate. The first electrode plate 30A described above may constitute the negative electrode plate, and the second electrode plate 30B may constitute the positive electrode plate, or vice versa.

For example, the aforementioned electrode tabs 21 and 22 may include a positive electrode tab 22 and a negative electrode tab 21. The negative electrode tab 21 may extend from the first electrode plate 30A, and the positive electrode tab 22 may extend from the second electrode plate 30B.

Hereinafter, the electrode plates 30A and 30B of the electrode assembly 20A that may be used in the aforementioned rechargeable battery 10A are described with reference to the drawings.

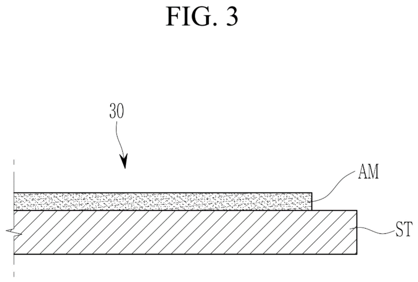

FIG. 3 is a cross-sectional view illustrating an electrode plate included in the rechargeable battery of FIG. 2.

Referring to FIG. 3, in the manufacturing process of the electrode plates 30A and 30B, generically illustrated as electrode plate 30, included in the electrode assembly 20A, the electrode assembly may be manufactured by applying an active material layer AM on a substrate ST.

The substrate ST may be or include a current collector, and the current collector may include any known conductive material to the extent that the known conductive material does not cause a chemical reaction within the rechargeable battery. For example, the current collector may include any one or more of stainless steel, nickel (Ni), aluminum (Al), titanium (Ti), copper (Cu), and alloys thereof, and may be provided in various forms such as, e.g., a film, a sheet, or a foil.

Although not shown in the drawings, the substrate ST may include a current collecting part and an uncoated region.

The current collecting part of the substrate ST may have an active material layer AM coated on at least one surface thereof. The active material layer AM may be applied to the remaining area except for the edge region of the current collecting part. For example, the edge region of the current collecting part may be the uncoated region where the active material layer AM is not applied.

The active material layer AM may be positioned on at least a part of one surface of the substrate ST, and the end part may be formed in multiple stages. The edge of the active material layer AM may be positioned apart from the edge of the substrate ST. The protective film, not shown, may be attached to the boundary between the active material layer AM and the substrate ST.

For example, a method for generating the active material layer AM on the substrate ST may be used in which a slurry is discharged onto a current collecting layer by using a slit coater (not shown), followed by a magnetization process using a permanent magnet and a drying process using a heater.

Alternatively, another method for creating the active material layer AM on the substrate ST may be attaching a film-like active material layer to the current collecting layer. For example, the active material layer may be or include, for example, a dry active material film. The method of manufacturing the dry active material film may be or include, for example, mixing a binder and an active material, heating (fusion) stirring the mixture in a twin-screw stirrer, and extruding the mixture through a nozzle, but it is not limited thereto.

The present disclosure includes the case where the slurry is coated on the substrate ST by a slit coater to generate the active material layer AM.

The typical magnetizing device may magnetize the slurry discharged by the slit coater M. The magnetizing device applies a magnetic field to the slurry applied on the substrate (ST) to orient it.

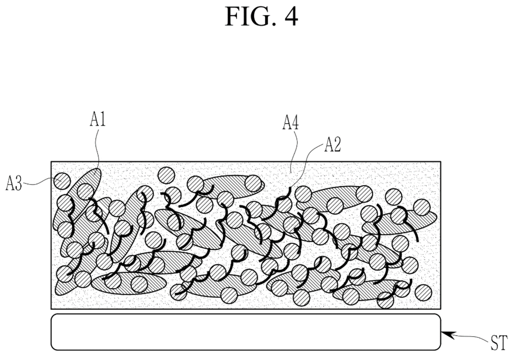

Meanwhile, the active material layer AM may further include, for example, graphite particles A1, a binder A2, and a conductive material A3, as illustrated in FIG. 4.

The graphite particles A1 may have a diamagnetic anisotropy. For example, the graphite particles A1 may have a plate-like shape. The average particle diameter of the graphite particles A1 may be in a range from about 0.05 µm to about 30 µm.

The graphite particles A1 may include bulk particles and fine particles. For example, the bulk particles may have an average particle diameter in a range of about 1 µm to about 30 µm, and the fine particles may have an average particle diameter in a range of about 0.05 µm or more and less than about 1 µm. When the content of the fine particles is high, reactivity with lithium ions may increase due to the increased surface area.

However, when the content of the fine particles is substantially high, an electrolyte decomposition or an alteration may occur due to an increase in the number of reactions. According to an example embodiment, the weight ratio of bulk particles to fine particles may be in a range of about 10:1 to about 3:1.

The binder A2 may improve a mechanical stability by mediating the bonding between the substrate ST and the active material. For example, the binder may be or include an organic binder or an aqueous binder, and may be used with a thickener such as, e.g., carboxyl methyl cellulose (CMC). For example, the organic binder may or include be any one or more of vinylidene fluoride-hexafluoropropylene copolymer (PVDF-co-HFP), polyvinylidene fluoride (PVDF), polyacrylonitrile, and polymethylmethacrylate, and the aqueous binder may be or include styrene-butadiene rubber (SBR), but it is not limited thereto.

The conductive material A3 may improve the electrical conductivity of the rechargeable battery. The conductive material may include a metal-based material. For example, the conductive material may include a conventional carbon-based conductive material. For example, the conductive material may include any one or more of graphite, carbon black, graphene, and carbon nanotube. For example, the conductive material may include carbon nanotubes, but it is not limited thereto.

Meanwhile, the slurry used in the manufacture of the active material layer AM may include not only the aforementioned graphite particles A1, the binder A2, and the conductive material A3, but also a solvent A4.

The solvent A4 may be or include an organic solvent such as or including at least one of N-methyl pyrrolidone, dimethyl formamide, acetone, dimethyl acetamide, water, or a combination thereof. The slurry including such solvent A4 may include, for example, about 5 wt% to about 30 wt% of graphite particles, about 1 wt% to about 10 wt% of binder, about 1 wt% to about 10 wt% of conductive material, and about 50 wt% to about 90 wt% of solvent, but is not limited thereto.

The aforementioned magnetizing device may include a magnetic body, such as a permanent magnet, located at a position spaced apart from the other surface of the substrate ST by a given distance such that the long axis of the aforementioned graphite particles A1 is aligned substantially vertically with respect to one surface of the substrate ST. Alternatively, it may be possible to attach the permanent magnet to the surface opposite to the slurry-coated surface of the substrate ST.

When a magnetic body such as the permanent magnet is placed at a position spaced a given distance away from the surface of the substrate ST, the distance between the substrate ST and the permanent magnet may be within about 1 cm, and the magnetic flux may be about 1,000 Gauss to about 10,000 Gauss, but is not limited thereto.

For example, during the manufacturing process of the electrode plates 30A and 30B included in the electrode assembly 20A, the active material layer AM may be applied on the substrate ST, and the magnetization process and the drying process may be performed

FIG. 4 is a cross-sectional view illustrating a state in which a slurry is applied to a substrate.

Referring to FIG. 4, a slurry including the aforementioned graphite particle A1, binder A2, conductive material A3, and solvent A4 may be coated on the substrate ST by a slit coater.

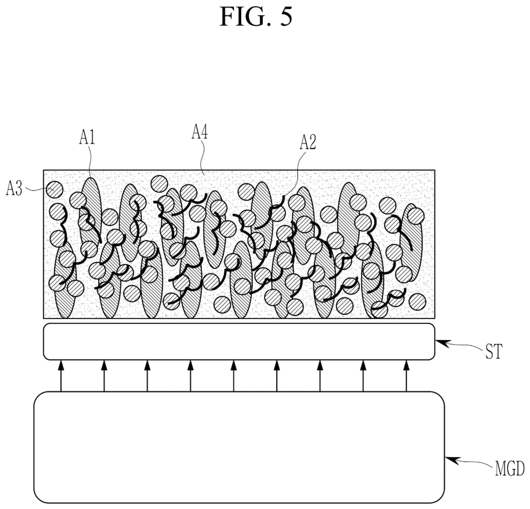

FIG. 5 is a cross-sectional view illustrating a state in which graphite particles included in a slurry are oriented by, e.g., a magnetizing device.

Referring to FIG. 5, the substrate ST is transported by a transport device (not shown). The graphite particles A1 are oriented by a magnetizing device MGD positioned a given distance away from the substrate ST. For example, the graphite particle A1 may be oriented in a direction substantially orthogonal to the substrate ST by the magnetic field of, e.g., the magnetizing device MGD.

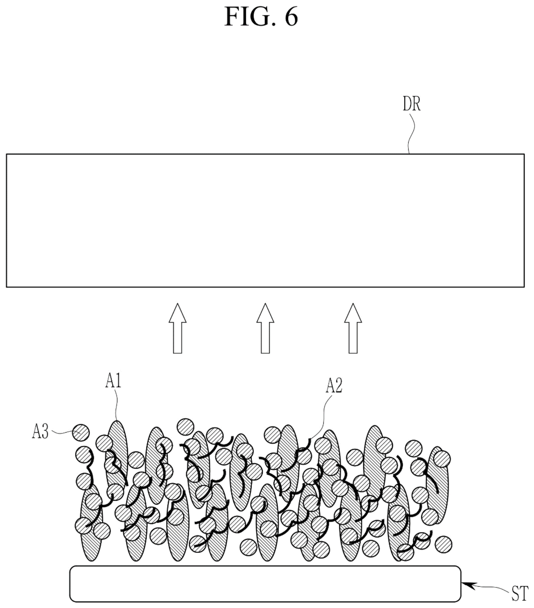

FIG. 6 is a cross-sectional view illustrating a state in which a slurry is dried by a drying device and a solvent is removed.

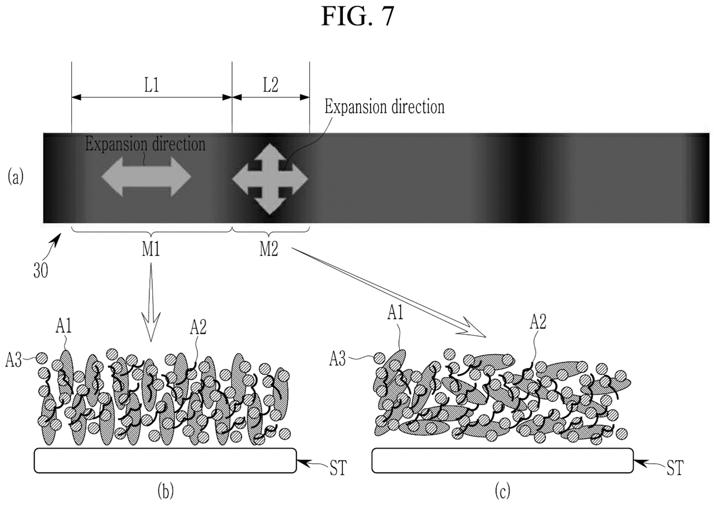

Referring to FIG. 6, the magnetized slurry may be dried by a drying device DR. The solvent included in the slurry (A4, referring to FIG. 5) may be removed by being gasified or evaporated by the drying device DR. For example, the graphite particle A1 may be maintained in the state oriented in a desired direction. The slurry that has undergone the magnetization process and the drying process as described above may become a magnetized part (M1, referring to FIG. 7) to be described later, and the slurry that has been dried without being magnetized by the magnetizing device (MGD, referring to FIG. 5) in the magnetization process may become a non-magnetized part (M2, referring to FIG. 7).

Hereinafter, the electrode plate 30 of the electrode assembly 20A included in the rechargeable battery 10A are described in detail with reference to the drawings.

FIG. 7 is a developed diagram illustrating an electrode plate included in an electrode assembly according to an example embodiment.

Referring to FIG. 7 (a), an electrode plate 30 included in an electrode assembly 20A according to an example embodiment includes a substrate (ST, referring to FIG. 3) and an active material layer (AM, referring to FIG. 3). In the active material layer (AM, referring to FIG. 3), the magnetized part M1, which is magnetized by the magnetizing device (MGD, referring to FIG. 5), and the non-magnetized part M2, which is not magnetized by the magnetizing device (MGD, referring to FIG. 5), are alternately disposed along the length direction of the substrate (ST, referring to FIG. 3). Because the substrate has been explained previously, a detailed description thereof is omitted.

As shown in FIG. 7 (b), the graphite particles A1 included in the magnetized part M1 are arranged in a direction in which the long axes thereof are substantially orthogonal to the substrate, so that their expansion direction is substantially the same as the length direction of the substrate. Furthermore, as shown in FIG. 7 (c), the graphite particles A1 included in the non-magnetized part M2 may be irregularly arranged in the long axes, and accordingly the expansion direction may be multidirectional. Accordingly, the expansion occurring in the magnetized part M1 may be alleviated by the non-magnetized part M2.

For this purpose, a length L2 of the non-magnetized part M2 may be within a range of about 10% to about 50% of a length L1 of the magnetized part M1. When the length L2 of the non-magnetized part M2 is less than about 10% of the length L1 of the magnetized part M1, it may be difficult for the non-magnetized part M2 to alleviate the expansion occurring in the magnetized part M1. Conversely, when the length L2 of the non-magnetized part M2 exceeds about 50% of the length L2 of the magnetized part M1, the area of the non-magnetized part M2 may increase substantially, which may reduce the charging and discharging performance of the rechargeable battery10A.

For example, the electrode assembly (20A, referring to FIG. 2) may be a jelly-roll type. That is, the electrode plate 30 and the separator (40, referring to FIG. 2) may be wound in one direction while being stacked.

The length L2 of the non-magnetized part M2 relative to the length L1 of the magnetized part M1 may increase from about 10% to about 50% from the center of the electrode assembly (20A, referring to FIG. 2) to the outside.

For example, where the electrode plate 30 is curved (hereinafter referred to as a "curved part"), the length of the part that is closer to the winding core is shorter and increases towards the coil end (the part closer to the outside of the electrode assembly).

The length L2 of the non-magnetized part M2 may be close to about 10% of the length L1 of the magnetized part M1 at the core. Also, the length L2 of the non-magnetized part M2 with respect to the length L1 of the magnetized part M1 may be closer to about 50% towards the coil end.

Returning to FIG. 2, when the electrode assembly 20A according to an example embodiment as described above is applied to the pouch-type rechargeable battery 10A, the electrode plate 30 included in the electrode assembly 20A may be alleviated from the expansion occurring in the length direction ("y" direction). Accordingly, by alleviating the force generated in the desired part of the electrode assembly 20A, the degradation characteristic of the rechargeable battery 10A may also be alleviated. Particularly, the non-magnetized part M2 may induce an expansion occurring in the curved part of the electrode plate 30 in a direction other than the "y" direction. Accordingly, lithium precipitation from the electrode plate 30 may also be reduced, thereby increasing lifespan.

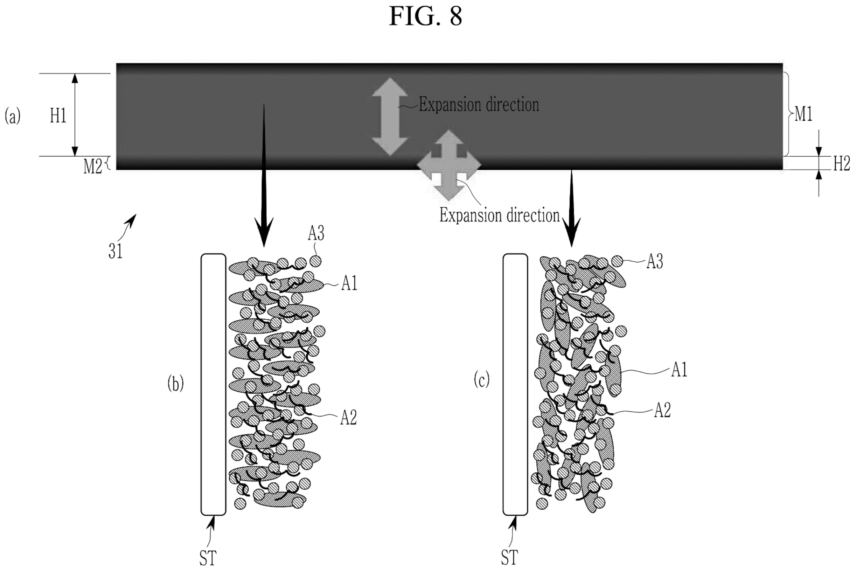

FIG. 8 is a developed diagram illustrating an electrode plate included in an electrode assembly according to another example embodiment of the present disclosure.

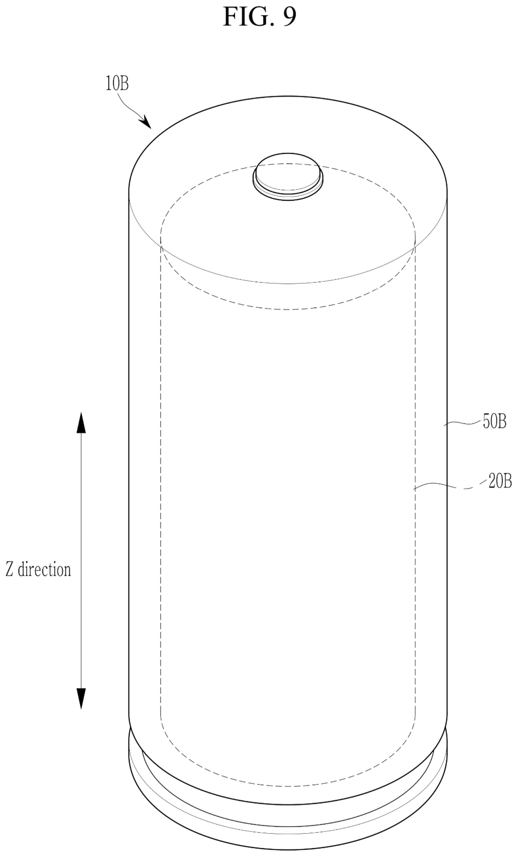

Referring to FIG. 8 (a), an electrode plate 31 included in an electrode assembly (20B, referring to FIG. 9) according to another example embodiment of the present disclosure may include a substrate (ST, referring to FIG. 3) and an active material layer (AM, referring to FIG. 3), and the active material layer (AM, referring to FIG. 3) includes a non-magnetized part M2 that is positioned along the edge with the length direction of the substrate (ST, referring to FIG. 3) as a reference and is not magnetized by the magnetizing device (MGD, referring to FIG. 5), and a magnetized part M1 that is magnetized by the magnetizing device (MGD, referring to FIG. 5) and is in the remaining part of the substrate (ST, referring to FIG. 3), excluding the non-magnetized part M2. Herein, because the substrate (ST, referring to FIG. 3) has been previously explained, a detailed description thereof is omitted.

As shown of FIG. 8 (b), the graphite particles A1 included in the magnetized part M1 are arranged so that their long axes are substantially orthogonal to the substrate, and their expansion direction is substantially the same as the width direction of the substrate. Furthermore, as shown in FIG. 8 (c), the graphite particles A1 included in the non-magnetized part M2 are arranged so that the long axes are arranged irregularly, and the expansion direction may also be multidirectional. Accordingly, the expansion occurring in the magnetized part M1 may be alleviated by the non-magnetized part M2.

For this purpose, a width H2 of the non-magnetized part M2 may be within a range of about 10% to about 20% with respect to a width H1 of the magnetized part M1. When the width H2 of the non-magnetized part M2 is less than about 10% of the width H1 of the magnetized part M1, it may be difficult for the non-magnetized part M2 to alleviate the expansion occurring in the magnetized part M1. Conversely, when the width H2 of the non-magnetized part M2 exceeds about 20% of the width H1 of the magnetized part M1, the area of the non-magnetized part M2 may increase substantially, thereby reducing the charging and discharging performance of the rechargeable battery 10A.

When the electrode plate 31 as described above is applied to an electrode assembly 20B of a cylindrical rechargeable battery 10B shown in FIG. 9, the expansion of the electrode assembly 20B occurring in the width direction (Z direction) may be alleviated. Accordingly, by alleviating the force generated in certain parts of the electrode assembly 20B, the degradation characteristics of the rechargeable battery 10B may also be alleviated.

Meanwhile, the cylindrical rechargeable battery 10B of FIG. 9 may include an electrode assembly 20B and a case 50B, and a detailed description thereof is omitted.

As stated above, the electrode assemblies 20A and 20B according to the present disclosure include the magnetized part M1 in which the graphite particles are magnetized, thereby improving the charge characteristics of the rechargeable battery, and also include the non-magnetized part M2 that alleviates the expansion characteristics that may occur in the magnetized part M1.

Accordingly, the rechargeable battery 10A and 10B in which the electrode assemblies 20A and 20B are installed according to examples of the present disclosure exhibit rapid performance, and the degradation characteristic of the rechargeable battery 10A may be alleviated by alleviating the force applied to a desired part of the electrode assembly 20B.

For example, it may be confirmed through the following electrode assembly length measurement experiments that the expansion of the electrode plates 30 and 31 of the electrode assemblies 20A and 20B according to examples of the present disclosure is alleviated compared to a conventional electrode assembly.

In Embodiment 1, Embodiment 2, Comparative Example 1, and Comparative Example 2 for the electrode assembly length measurement experiment, each electrode assembly is manufactured and then inserted into a case to manufacture a rechargeable battery. In addition, the length of the specific direction of the electrode assembly before the insertion into the case is measured, and the length of the specific direction of the electrode assembly after the formation process is measured.

The electrode assembly of Embodiment 1 and Embodiment 2 consists of an electrode plate including a non-magnetized part and a magnetized part. Also, the electrode assemblies of Comparative Example 1 and Comparative Example 2 consist of electrode plates that do not include non-magnetized parts and include only magnetized parts.

Table 1 below shows lengths in a specific direction of the electrode assemblies of Embodiment 1 and Comparative Example 1.

**Table 1:**

| | Embodiment 1 | Comparative Example 1 |
|---|---|---|
| Before case insertion | 57.9 | 57.9 |
| After formation process | 58.2 | 58.5 |

The electrode assembly of Embodiment 1 of Table 1 applies the electrode plate 30 illustrated in FIG. 7. The resulting values in Table 1 are the lengths (a unit of mm) of the electrode assembly in the "y" direction (referring to FIG. 2).

The length of the "y" direction before the electrode assemblies of both Embodiment 1 and Comparative Example 1 are assembled inside the case is 57.9 mm. However, after the formation process is performed, the length of the electrode assembly in the "y" direction in Comparative Example 1 is measured as 58.5 mm, and the length of the electrode assembly in the "y" direction in Embodiment 1 is measured as 58.2 mm.

As shown in Table 1, the electrode assembly of Embodiment 1 is measured to be relatively shorter in length than the electrode assembly of Comparative Example 2, while the expansion characteristic of the "y" direction is alleviated.

Table 2 below lists the lengths in specific directions of the electrode assemblies of Embodiment 2 and Comparative Example 2.

**Table 2:**

| | Embodiment 2 | Comparative Example 2 |
|---|---|---|
| Before case insertion | 63.7 | 63.7 |
| After formation process | 65.2 | 66.6 |

The electrode assembly of Embodiment 2 of Table 2 applies the electrode plate 31 shown in FIG. 8. The resulting value in Table 2 is the length (a unit of mm) of the electrode assembly (see FIG. 9) in the z direction.

The length in the z direction before the electrode assemblies of both Embodiment 2 and Comparative Example 2 are assembled inside the case is 63.7 mm. However, after implementation of the formation process, the length of the electrode assembly in the z direction in Comparative Example 2 is measured as 66.6 mm, and the length of the electrode assembly in the z direction in Embodiment 2 is measured as 65.2 mm.

As shown in Table 2, the electrode assembly of Embodiment 2 is measured to be relatively shorter in the length than the electrode assembly of Comparative Example 2, as the expansion characteristic in the z direction is alleviated.

As described above, it may be confirmed that the electrode assemblies of Embodiment 1 and Embodiment 2 have more relaxed expansion characteristics than the electrode assemblies of Comparative Example 1 and Comparative Example 2.

The drawings referred to in the above and disclosed detailed description of the present disclosure only illustrate the present disclosure, and are intended to describe the present disclosure, not to restrict the meanings or limit the scope of the present disclosure claimed in the claims. Therefore, those skilled in the art would understand that various modifications and other equivalent example embodiments may be made therefrom. Accordingly, the true technical protection scope of the present disclosure must be determined by the technical features of the accompanying claims.

### Description of symbols:

| | | | |
|---|---|---|---|
| 10A, 10B: | rechargeable battery | 20A, 20B: | electrode assembly |
| 30, 31: | electrode plate | 40: | separator |
| 50A, 50B: | case | ST: | substrate |
| AM: | active material layer | M1: | magnetized part |
| M2: | non-magnetized part | A1: | graphite particle |
| A2: | binder | A3: | conductive material |
| A4: | solvent | | |

## Claims

1. An electrode assembly (20A) comprising:
a separator (40); and
a plurality of electrode plates (30) stacked together, with the separator (40) therebetween,
wherein at least one of the electrode plates (30) comprises:
a)
a substrate (ST); and
an active material layer (AM) in which a magnetized part (M2) magnetized by a magnetizing device (MGD), and a non-magnetized part (M1) not magnetized by the magnetizing device (MGD), are alternately disposed along a length direction of the substrate (ST); or
b)
a substrate (ST); and
an active material layer (AM) including a non-magnetized part (M2) that is positioned along an edge with a length direction of the substrate (ST) as a reference and is not magnetized by a magnetizing device (MGD), and a magnetized part (M1) that is magnetized by the magnetizing device (MGD) and is in a remaining part of the substrate (ST) excluding the non-magnetized part (M2).

2. The electrode assembly (20A) of claim 1, wherein
a length of the non-magnetized part (M2) is within a range of 10% to 50% of a length of the magnetized part (M1).

3. The electrode assembly (20A) of any of claims 1 or 2, wherein:
the at least one electrode plate (30) and the separator (40) are wound in one direction and are stacked on each other, and
the length of the non-magnetized part (M2) relative to the length of the magnetized part (M1) increases from 10% to 50% from the center of the electrode assembly (20A) towards the outside.

4. The electrode assembly of any of claims 1 to 3, wherein
the width of the non-magnetized part (M2) is within a range of 10% to 20% of the width of the magnetized part (M1).

5. The electrode assembly of any of claims 1 to 4, wherein
the active material layer (AM) includes at least one of graphite particles, a binder, and a conductive material.

6. The electrode assembly of claim 5, wherein
the graphite particles included in the magnetized part (M1) are oriented in a direction substantially orthogonal to the substrate (ST).

7. The electrode assembly of any of claims 1 to 6, wherein
the plurality of electrode plates (30) comprise a positive electrode plate (30B) and a negative electrode plate (30A).

8. A rechargeable battery (10A) comprising:
the electrode assembly (20A) of any of claims 1 to 7; and
a case (50A) that accommodates the electrode assembly (20A).
